# EUROPEAN PATENT SPECIFICATION

(11) **EP 4 579 907 B1**
(45) Date of publication and mention of the grant of the patent: **23.09.2026**
(21) Application number: 23866656.4
(22) Date of filing: 30.10.2023
(51) Int. Cl.: H01M 50/204, H01M 50/244, H01M 50/284, H02J 7/70, H01M 50/247, H01M 50/269, H01M 50/213, H01M 50/202, H02J 7/00, H01M 50/51, H01M 50/258, H01M 50/256, H01M 50/264

(54) **OUTDOOR MOBILE POWER SUPPLY AND ELECTRONIC ASSEMBLY**
MOBILE OUTDOOR-STROMVERSORGUNG UND ELEKTRONISCHE BAUGRUPPE
ALIMENTATION ÉLECTRIQUE MOBILE EXTÉRIEURE ET ENSEMBLE ÉLECTRONIQUE

(30) Priority: 13.10.2023 CN 202311326239
(43) Date of publication of application: 02.07.2025
(73) Proprietor: Gopod Group Holding Limited, Shenzhen, Guangdong 518109 (CN)
(72) Inventor: LIAO, Zhuowen, Shenzhen, Guangdong 518109 (CN); SONG, Xingwang, Shenzhen, Guangdong 518109 (CN); MIAO, Long, Shenzhen, Guangdong 518109 (CN)
(74) Representative: Santarelli
(86) International application number: PCT/CN2023/127984
(87) International publication number: WO 2025/076874

(56) References cited:
- CN-A- 116 105 104
- CN-A- 116 171 361
- CN-A- 116 171 361
- CN-U- 205 622 251
- CN-U- 205 622 251
- CN-U- 216 311 939
- CN-U- 216 643 904
- CN-U- 218 845 642
- CN-U- 218 845 642
- CN-U- 219 177 606
- CN-U- 219 318 359

## Description

### Technical Field

This disclosure relates to the field of electronic component technology, and more particularly, to an outdoor portable power supply and electronic component.

### Background Art

An outdoor portable power supply is a special type of portable power source primarily used for power supply in outdoor environments. It typically uses high-capacity batteries as the energy source and can provide power to various outdoor devices such as camping lights, mobile phones, tablets, cameras, drones, GPS devices, speakers, etc.

Outdoor portable power supplies are often used for outdoor travel and for various mobile devices. Therefore, compared to conventional portable power supplies, they need to have a larger capacity, which means they contain more battery cells inside each battery. This implies that outdoor portable power supplies are heavier than conventional portable power supplies.

However, most existing outdoor portable power supplies, in order to increase capacity, are equipped with multiple batteries. Since a single battery is already quite heavy, an outdoor portable power supply with multiple batteries becomes even more cumbersome, making it inconvenient to carry and move around.

CN219318359U discloses a telescopic and foldable outdoor illuminating lamp, which comprises a folding frame, which comprises a main body base and a supporting leg, and the supporting leg can be unfolded relative to the main body base to form support and can be folded back and stored relative to the main body base; a base is fixed on the main body base, and a power supply for supplying power is arranged in the base; the lower end of a telescopic pipe is fixed on the base; the light source is fixed at the top of the telescopic tube. The telescopic pipe can extend to adjust the height of the whole outdoor illuminating lamp, and the telescopic pipe can retract to reduce the height.

CN219177606U discloses a lighting device, including a mounting structure, a power supply assembly and a lighting assembly; the mounting structure comprises a guide rod assembly, a main body and a supporting foot stand, the main body is slidably connected to the guide rod assembly, and the supporting foot stand is rotatably connected to the main body; the main body can drive the supporting foot stand to move relative to the guide rod assembly, and the supporting foot stand can be switched between an unfolded state and a folded state; the power supply assembly is arranged in the main body and can move along with the movement of the main body; the lighting assembly is arranged on a side of the main body opposite to the supporting foot stand, and the lighting assembly is electrically connected to the power supply assembly so that the power supply assembly can supply power to the lighting assembly.

CN218845642U discloses a photographic stand, comprising a central tube having a first end and a second end arranged along an axial direction; a supporting tripod, comprising a sliding member, a plurality of legs, and a first elastic member; the sliding member can move along the central tube so that the legs are in a folded state at the first end and in an extended state at the second end; a locking assembly, comprising a first locking member and a second locking member; in the folded state, the first locking member keeps the supporting tripod relatively fixed to the central tube and allows the first elastic member to accumulate elastic force; the second locking member can drive the first locking member to retract into the central tube so that the first elastic member can release the elastic force and drive the legs to extend.

CN205622251U discloses a battery pack comprising a plurality of battery modules capable of unlimited expansion and connection. Each battery module comprises: a housing; a first interface serving as a charging interface; and a second interface serving as a discharging interface. The housing has a first contact and a second contact, and is configured to be removably assembled with the housing of an adjacent battery module, such that each battery module assembled through the housing is electrically connected via one of the first contact and the second contact.

CN116171361A discloses a lighting device comprises a base assembly, a circuit board being arranged in the base assembly; a telescopic part provided with a fixed end and a free end which are oppositely arranged, and the fixed end being connected to the base assembly; and a lighting assembly rotationally connected to the free end so that the lighting assembly can rotate in the axial direction and the radial direction of the free end. Extension and contraction of the lighting assembly and the lighting piece are achieved through the telescopic part, so that the height of the lighting device can be adjusted.

### Summary of the Invention

The present invention is set out in the appended claims.

In view of this, the purpose of this disclosure is to overcome the deficiencies in the existing technology and provide an outdoor portable power supply.

To solve the above technical problems, this disclosure provides:
An outdoor portable power supply, comprising:
A base assembly;
A guide rail component, which is arranged on the base assembly;
A telescopic component, which is arranged on the base assembly, and a part of which is located inside the guide rail component;
A first battery, which is arranged on the guide rail component and is sleeved on the telescopic component, with the first battery having a first electrical connection part at one end away from the guide rail component.

Additionally, according to the outdoor portable power supply of this disclosure, it may also have the following additional technical features:
In the present invention, the outdoor portable power supply further includes at least one second battery, with one of the second batteries sleeved on the telescopic component and electrically connected to the first electrical connection part, and the remaining second batteries successively sleeved on the telescopic component along its axial direction and electrically connected in sequence.

In some embodiments of this disclosure, the second battery has a second electrical connection part and a third electrical connection part, which are located at both ends of the second battery, respectively. The second electrical connection part of one second battery is electrically connected to the first electrical connection part, and the third electrical connection part of one second battery is electrically connected to the second electrical connection part of an adjacent second battery.

In some embodiments of this disclosure, the outdoor portable power supply further includes a circuit board, which is arranged within the casing of the first battery and is electrically connected to the first battery.

In some embodiments of this disclosure, the circuit board is equipped with a charging interface, and the casing of the first battery has a first clearance hole adapted to the charging interface.

In some embodiments of this disclosure, the circuit board is equipped with a power button, and the casing of the first battery has a second clearance hole adapted to the power button.

In some embodiments of this disclosure, the base assembly includes a base, a sliding component, a support framework, and a support element, with the guide rail component arranged on the base, the sliding component slidably engaged with the guide rail component, one end of the support framework hinged to the sliding component, and the support element hinged to both the support framework and the base, respectively.

In some embodiments of this disclosure, the base assembly further includes a trigger device, which is arranged within the sliding component. The trigger device includes a manual actuator, a clamping component, and an elastic element. The sliding component has a first through hole and a second through hole. The manual actuator is movably inserted through the first through hole and connected to the clamping component. One end of the clamping component is movably inserted through the second through hole and abuts the guide rail component. The elastic element abuts both the end of the clamping component away from the second through hole and the sliding component.

Additionally, this disclosure also provides an electronic component, including an electronic device and the outdoor portable power supply described in any of the above embodiments.

In some embodiments of this disclosure, one end of the electronic device has a fourth electrical connection part that is electrically connected to the first electrical connection part.

Compared to the existing technology, the beneficial effects of this disclosure are:
This disclosure proposes an outdoor portable power supply, which includes a base assembly, a guide rail component, a telescopic component, and a first battery. By arranging both the guide rail component and the telescopic component on the base assembly, with a part of the telescopic component located inside the guide rail component, it achieves a stable installation function for the guide rail component and the telescopic component, and the telescopic component can extend or retract relative to the guide rail component. By arranging the first battery on the guide rail component and sleeving it on the telescopic component, it achieves a stable installation function for the first battery. Moreover, by setting up the first electrical connection part at one end of the first battery away from the guide rail component, when the outdoor portable power supply is in use, the user can extend the telescopic component and sequentially sleeve other batteries on the telescopic component to increase the capacity of the outdoor portable power supply. When the outdoor portable power supply is being transported, the user can sequentially remove the other batteries from the telescopic component and retract the telescopic component to reduce the weight of the outdoor portable power supply, thereby facilitating its use and portability. The outdoor portable power supply provided by this disclosure allows users to flexibly install and remove batteries according to their usage and transportation needs, effectively enhancing convenience in use and portability.

### Brief Description of the Drawings

To more clearly illustrate the technical solutions in the embodiments of this disclosure, the drawings needed for the embodiments will be briefly introduced below. It should be understood that the following drawings only show some embodiments of this disclosure and should not be taken as limiting the scope. For those of ordinary skill in the art, other related drawings can be obtained based on these drawings without creative efforts.
FIG. 1 shows a perspective view of the outdoor portable power supply in some embodiments of this disclosure;
FIG. 2 shows a perspective view of the outdoor portable power supply in FIG. 1 with the first battery removed;
FIG. 3 shows a perspective view of the first battery in some embodiments of this disclosure;
FIG. 4 shows a perspective view of the first battery in FIG. 3 with the casing removed;
FIG. 5 shows a perspective view of the guide rail component and base assembly in some embodiments of this disclosure;
FIG. 6 shows a perspective view of FIG. 5 with the sliding component removed;
FIG. 7 shows a perspective view of FIG. 6 with the guide rail component removed;
FIG. 8 shows a perspective view of the electronic component in some embodiments of this disclosure;
FIG. 9 shows a perspective view of the electronic device in some embodiments of this disclosure.

Reference numerals:
100 - Outdoor portable power supply; 110 - Base assembly; 111 - Base; 112 - Sliding component; 1121 - First through hole; 1122 - Second through hole; 113 - Support framework; 114 - Support element; 115 - Trigger device; 1151 - Manual actuator; 1152 - Clamping component; 1153 - Elastic element; 120 - Guide rail component; 130 - Telescopic component; 140 - First battery; 141 - First electrical connection part; 142 - First clearance hole; 143 - Second clearance hole; 150 - Circuit board; 151 - Charging interface; 152 - Power button; 1000 - Electronic component; 200 - Electronic device; 210 - Fourth electrical connection part.

### Detailed Description of Embodiments

The embodiments of this disclosure are described in detail below, with examples shown in the accompanying drawings, where the same or similar reference numbers denote the same or similar elements or elements with the same or similar functions throughout. The embodiments described by reference to the drawings are exemplary and are intended only to explain this disclosure and should not be construed as limiting this disclosure.

In the description of this disclosure, it should be understood that terms such as "center," "longitudinal," "lateral," "length," "width," "thickness," "top," "bottom," "front," "back," "left," "right," "vertical," "horizontal," "upper," "lower," "inside," "outside," "clockwise," "counterclockwise," "axial," "radial," "circumferential," and so on, indicate orientations or positional relationships based on the orientations or positional relationships shown in the drawings. They are only for convenience in describing this disclosure and simplifying the description, and do not indicate or imply that the devices or elements referred to must have a particular orientation, be constructed and operated in a particular orientation, and thus should not be construed as limiting this disclosure.

Furthermore, terms such as "first," "second," and the like are used for descriptive purposes only and are not to be construed as indicating or implying relative importance or implicitly indicating the number of technical features indicated. Thus, a feature defined as "first," "second," may explicitly or implicitly include one or more of such features. In the description of this disclosure, the meaning of "a plurality" is two or more unless otherwise specified.

In this disclosure, unless otherwise clearly defined and limited, terms such as "mounted," "connected," "connected," "fixed," and the like should be understood broadly. For example, they can be fixedly connected, detachably connected, or integrally formed; they can be mechanically connected or electrically connected; they can be directly connected or indirectly connected through an intermediary, or they can be the internal communication of two elements or the interaction between two elements. For those of ordinary skill in the art, the specific meanings of the above terms in this disclosure can be understood according to specific circumstances.

In this disclosure, unless otherwise clearly defined and limited, a first feature "on" or "under" a second feature can mean that the first and second features are in direct contact, or that the first and second features are not in direct contact but instead are indirectly connected through an intermediary. Moreover, the first feature "above," "above," and "on top of" the second feature can mean that the first feature is directly above or obliquely above the second feature, or simply that the first feature is higher than the second feature. The first feature "below," "below," and "underneath" the second feature can mean that the first feature is directly below or obliquely below the second feature, or simply that the first feature is lower than the second feature.

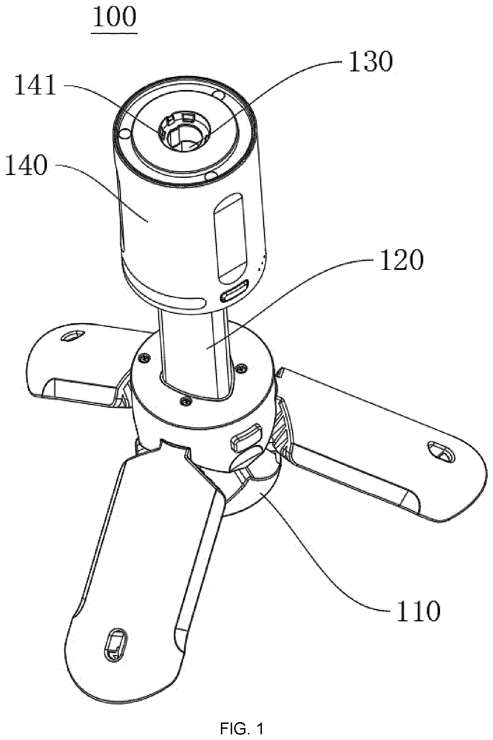

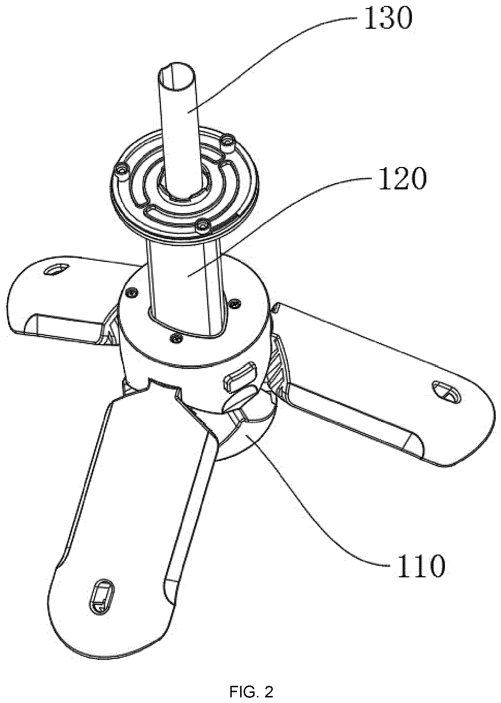

As shown in FIGS. 1 and 2, the present invention provides an outdoor portable power supply 100, mainly used for electronic components 1000. The outdoor portable power supply 100 includes a base assembly 110, a guide rail component 120, a telescopic component 130, and a first battery 140.

Wherein, the guide rail component 120 is arranged on the base assembly 110, the telescopic component 130 is arranged on the base assembly 110, and a part of the telescopic component 130 is located inside the guide rail component 120, the first battery 140 is arranged on the guide rail component 120, and is sleeved on the telescopic component 130, the first battery 140 has a first electrical connection part 141 at one end away from the guide rail component 120.

The outdoor portable power supply 100 provided by the embodiment of this disclosure, by arranging the guide rail component 120 and the telescopic component 130 on the base assembly 110, and a part of the telescopic component 130 located inside the guide rail component 120, achieves a stable installation function for the guide rail component 120 and the telescopic component 130, and the telescopic component 130 can extend or retract relative to the guide rail component 120.

By arranging the first battery 140 on the guide rail component 120 and sleeving it on the telescopic component 130, it achieves a stable installation function for the first battery 140. At the same time, by setting up the first electrical connection part 141 at one end of the first battery 140 away from the guide rail component 120, when the outdoor portable power supply 100 is in use, the user can extend the telescopic component 130 and sequentially sleeve other batteries on the telescopic component 130 to increase the capacity of the outdoor portable power supply 100. When the outdoor portable power supply 100 is being transported, the user can sequentially remove the other batteries from the telescopic component 130 and retract the telescopic component 130 to reduce the weight of the outdoor portable power supply 100, thereby facilitating its use and portability. The outdoor portable power supply 100 provided by this disclosure allows users to flexibly install and remove batteries according to their usage and transportation needs, effectively enhancing convenience in use and portability.

The outdoor portable power supply 100 also includes at least one second battery, with one of the second batteries sleeved on the telescopic component 130 and electrically connected to the first electrical connection part 141, and the remaining second batteries successively sleeved on the telescopic component 130 along its axial direction and electrically connected in sequence.

In the present invention, by setting the number of second batteries to at least one, where one second battery is sleeved on the telescopic component 130 and electrically connected to the first electrical connection part 141, and the remaining second batteries are successively sleeved on the telescopic component 130 along its axial direction and electrically connected in sequence, the user can extend the telescopic component 130 and sequentially sleeve the second batteries on the telescopic component 130 to increase the capacity of the outdoor portable power supply 100 when in use. When the outdoor portable power supply 100 is being transported, the user can sequentially remove the second batteries from the telescopic component 130 and retract the telescopic component 130 to reduce the weight of the outdoor portable power supply 100, thereby facilitating its use and portability. Thus, users can flexibly install and remove the second batteries according to their usage and transportation needs, effectively enhancing convenience in use and portability.

In the above embodiments of this disclosure, optionally, the second battery has a second electrical connection part and a third electrical connection part, which are located at both ends of the second battery, respectively. The second electrical connection part of one second battery is electrically connected to the first electrical connection part 141, and the third electrical connection part of one second battery is electrically connected to the second electrical connection part of an adjacent second battery.

In this embodiment, by setting the second electrical connection part and the third electrical connection part at both ends of the second battery, and electrically connecting the second electrical connection part of one second battery to the first electrical connection part 141, and the third electrical connection part of that second battery to the second electrical connection part of an adjacent second battery, it allows the first battery 140 and multiple second batteries to be electrically connected in series, thereby expanding the capacity of the outdoor portable power supply 100.

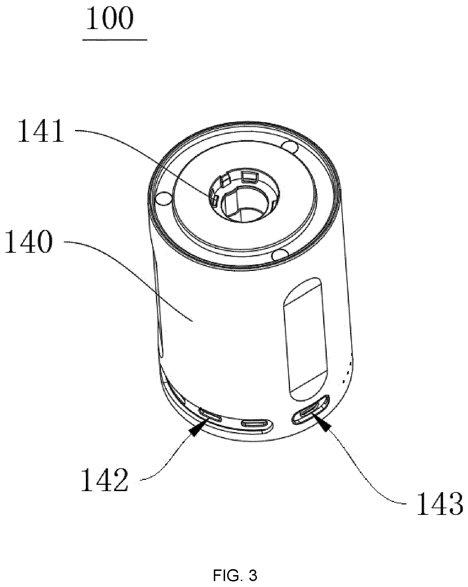

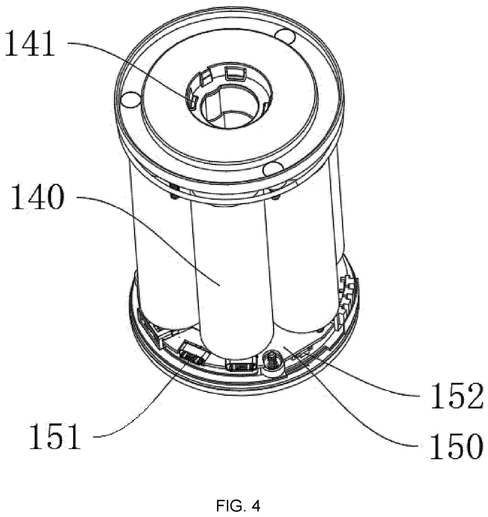

As shown in FIGS. 3 and 4, in one embodiment of this disclosure, optionally, the outdoor portable power supply 100 also includes a circuit board 150, which is arranged within the casing of the first battery 140 and is electrically connected to the first battery 140. Thus, by setting up the circuit board 150, it achieves the function of controlling the charging and discharging of the first battery 140.

As shown in FIGS. 3 and 4, in the above embodiments of this disclosure, optionally, the circuit board 150 is equipped with a charging interface 151, and the casing of the first battery 140 has a first clearance hole 142 adapted to the charging interface 151. Thus, the user can use a data cable compatible with the charging interface 151 to charge the outdoor portable power supply 100 or to charge outdoor devices such as mobile phones with the outdoor portable power supply 100.

As shown in FIGS. 3 and 4, in the above embodiments of this disclosure, optionally, the circuit board 150 is equipped with a power button 152, and the casing of the first battery 140 has a second clearance hole 143 adapted to the power button 152. Thus, the user can turn the outdoor portable power supply 100 on or off by pressing the power button 152.

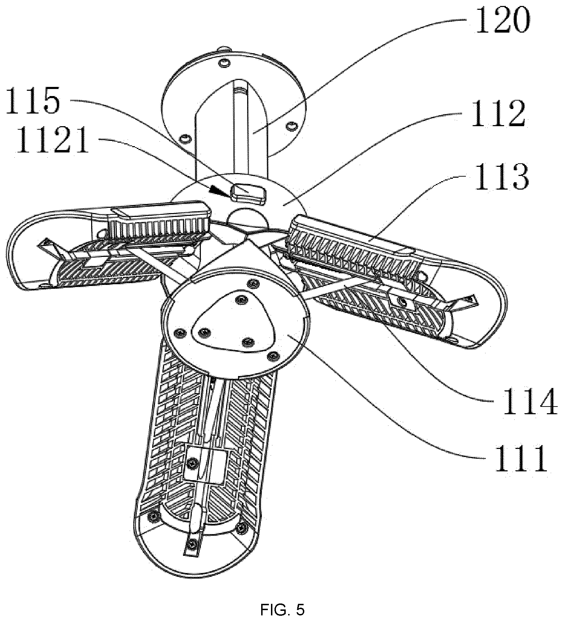

As shown in FIG. 5, in one embodiment of this disclosure, optionally, the base assembly 110 includes a base 111, a sliding component 112, a support framework 113, and a support element 114, with the guide rail component 120 arranged on the base 111, the sliding component 112 slidably engaged with the guide rail component 120, one end of the support framework 113 hinged to the sliding component 112, and the support element 114 hinged to both the support framework 113 and the base 111, respectively.

In this embodiment, by arranging the guide rail component 120 on the base 111, it achieves a stable installation function for the guide rail component 120. By slidably engaging the sliding component 112 on the guide rail component 120, hinging one end of the support framework 113 to the sliding component 112, and hinging the support element 114 to both the support framework 113 and the base 111, it allows for stable and adjustable support.

Specifically, the sliding component 112 can freely slide on the guide rail component 120, and when the sliding component 112 moves to the lowest position and contacts the base 111, it is restricted by the base 111 from sliding out of the guide rail component 120. The support framework 113 is hinged to the sliding component 112, allowing the support framework 113 to rotate relative to the sliding component 112, and the support element 114 is hinged to both the support framework 113 and the base 111, allowing the support element 114 to rotate relative to both the support framework 113 and the base 111.

When the sliding component 112 is pressed and moves towards the base 111, the distance between the sliding component 112 and the base 111 shortens, and the downward pressure from the sliding component 112 and the upward support from the base 111 generate an outward force. At this time, under the action of this force, the support framework 113 opens outward, i.e., the support framework 113 is in an open state, which increases the radius of the ground support point and effectively increases the stability of the outdoor portable power supply 100 when standing, allowing it to stand stably even in a tilted position.

Correspondingly, when the sliding component 112 is pulled upwards, the forces are reversed, and the support framework 113 will retract inward under this force, thus opening and retracting the support framework 113 by moving the sliding component 112. In the retracted state, it has a smaller volume, making it more convenient to carry.

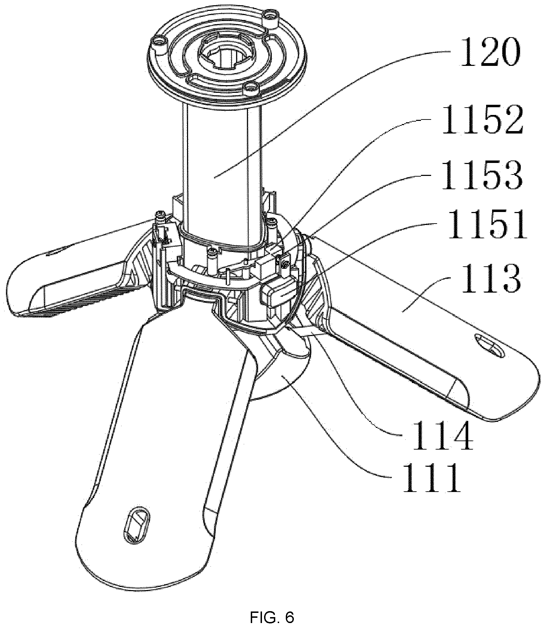

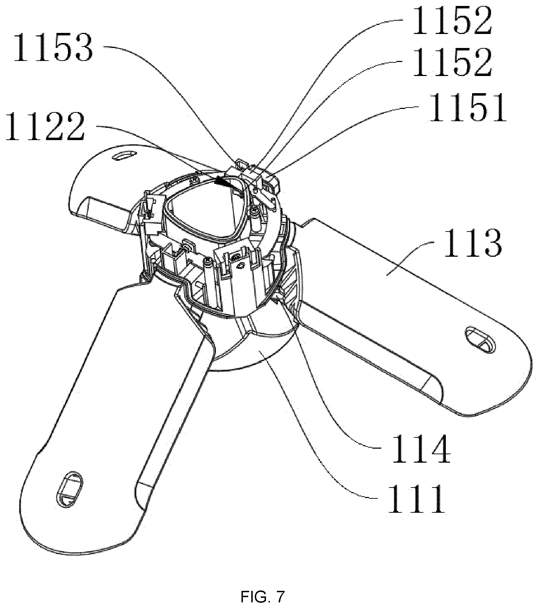

As shown in FIGS. 6 and 7, in the above embodiments of this disclosure, optionally, the base assembly 110 also includes a trigger device 115, which is arranged within the sliding component 112. The trigger device 115 includes a manual actuator 1151, a clamping component 1152, and an elastic element 1153. The sliding component 112 has a first through hole 1121 and a second through hole 1122. The manual actuator 1151 is movably inserted through the first through hole 1121 and connected to the clamping component 1152. One end of the clamping component 1152 is movably inserted through the second through hole 1122 and abuts the guide rail component 120. The elastic element 1153 abuts both the end of the clamping component 1152 away from the second through hole 1122 and the sliding component 112.

In this embodiment, by movably inserting one end of the clamping component 1152 through the second through hole 1122 of the sliding component 112 and abutting it against the guide rail component 120, and having the elastic element 1153 abut both the end of the clamping component 1152 away from the second through hole 1122 and the sliding component 112, with the elastic element 1153 in a compressed state, it utilizes the elastic force of the elastic element 1153 to automatically drive one end of the clamping component 1152 through the second through hole 1122 to abut and press against the guide rail component 120, thereby preventing the sliding component 112 from sliding relative to the guide rail component 120, and thus keeping the support framework 113 stably in an open or retracted state.

By movably inserting the manual actuator 1151 through the first through hole 1121 of the sliding component 112 and connecting it to the clamping component 1152, when it is necessary to open or retract the support framework 113, the user can toggle the manual actuator 1151 to retract one end of the clamping component 1152 into the second through hole 1122, separating the clamping component 1152 from the guide rail component 120, thereby allowing the sliding component 112 to slide relative to the guide rail component 120, and thus allowing the support framework 113 to be opened or retracted.

When the user toggles the manual actuator 1151 to retract one end of the clamping component 1152 into the second through hole 1122 and separates it from the guide rail component 120, the elastic element 1153 is further compressed and generates a restoring force. Thus, when the user releases the manual actuator 1151 after the support framework 113 is fully opened or retracted, the clamping component 1152 returns to its original position under the restoring force, pressing against the guide rail component 120 again, and also returning the manual actuator 1151 to its original position.

### Embodiment Two

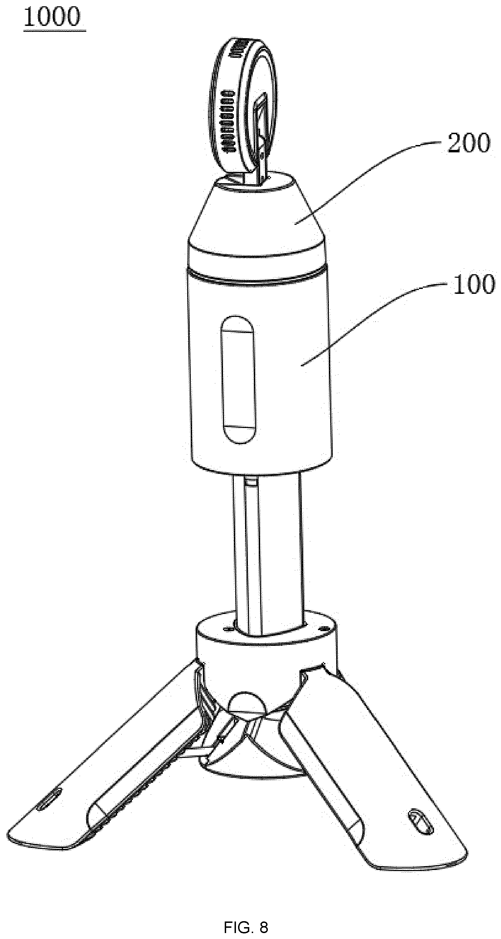

As shown in FIG. 8, in Embodiment Two of this disclosure, an electronic component 1000 is also provided, which includes an electronic device 200 and the outdoor portable power supply 100 described in any of the embodiments of Embodiment One.

Exemplarily, the electronic device 200 can be a camping light, a wireless charging device, a mosquito repellent device, etc.

The electronic component 1000 has the outdoor portable power supply 100 described in Embodiment One, and therefore has all the beneficial effects described in Embodiment One, which are not reiterated here.

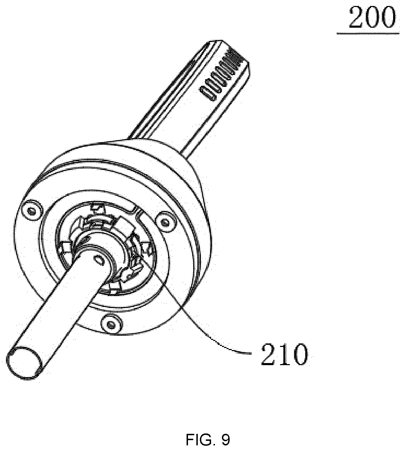

As shown in FIG. 9, in the above embodiments of this disclosure, optionally, one end of the electronic device 200 has a fourth electrical connection part 210 that is electrically connected to the first electrical connection part 141.

In this embodiment, by setting up the fourth electrical connection part 210 at one end of the electronic device 200 to be electrically connected to the first electrical connection part 141, it allows the electronic device 200 to be electrically connected to the outdoor portable power supply 100, thereby providing power to the electronic device 200.

In summary, this disclosure proposes an outdoor portable power supply, which includes a base assembly, a guide rail component, a telescopic component, and a first battery. By arranging both the guide rail component and the telescopic component on the base assembly, with a part of the telescopic component located inside the guide rail component, it achieves a stable installation function for the guide rail component and the telescopic component, and the telescopic component can extend or retract relative to the guide rail component. By arranging the first battery on the guide rail component and sleeving it on the telescopic component, it achieves a stable installation function for the first battery. Moreover, by setting up the first electrical connection part at one end of the first battery away from the guide rail component, when the outdoor portable power supply is in use, the user can extend the telescopic component and sequentially sleeve other batteries on the telescopic component to increase the capacity of the outdoor portable power supply. When the outdoor portable power supply is being transported, the user can sequentially remove the other batteries from the telescopic component and retract the telescopic component to reduce the weight of the outdoor portable power supply, thereby facilitating its use and portability. The outdoor portable power supply provided by this disclosure allows users to flexibly install and remove batteries according to their usage and transportation needs, effectively enhancing convenience in use and portability.

In the description of this specification, references to the terms "an embodiment," "some embodiments," "an example," "a specific example," or "some examples" mean that a particular feature, structure, material, or characteristic described in connection with the embodiment or example is included in at least one embodiment or example of the disclosure. In the specification, schematic expressions of the terms above do not necessarily refer to the same embodiment or example. Furthermore, the particular features, structures, materials, or characteristics described may be combined in any suitable manner in one or more embodiments or examples. In addition, without conflicting with each other, those skilled in the art can combine and combine the different embodiments or examples and the features of the different embodiments or examples described in this specification.

Although embodiments of this disclosure have been shown and described, it is to be understood that the above descriptions are exemplary and should not be considered as limiting the disclosure.

### Industrial Applicability

The present invention proposes an outdoor portable power supply and electronic component. The outdoor portable power supply includes a base assembly, a guide rail component, a telescopic component, and a first battery. By arranging both the guide rail component and the telescopic component on the base assembly, with a part of the telescopic component located inside the guide rail component, it achieves a stable installation function for the guide rail component and the telescopic component, and the telescopic component can extend or retract relative to the guide rail component. By arranging the first battery on the guide rail component and sleeving it on the telescopic component, it achieves a stable installation function for the first battery. Moreover, by setting up the first electrical connection part at one end of the first battery away from the guide rail component, when the outdoor portable power supply is in use, the user can extend the telescopic component and sequentially sleeve other batteries on the telescopic component to increase the capacity of the outdoor portable power supply. When the outdoor portable power supply is being transported, the user can sequentially remove the other batteries from the telescopic component and retract the telescopic component to reduce the weight of the outdoor portable power supply, thereby facilitating its use and portability. The outdoor portable power supply provided by this invention allows users to flexibly install and remove batteries according to their usage and transportation needs, effectively enhancing convenience in use and portability.

Furthermore, it is to be understood that the outdoor portable power supply and electronic component provided by the present invention are reproducible and can be used in various industrial applications. For example, the outdoor portable power supply and electronic component provided by the present invention can be used in the field of power supply in outdoor environments.

## Claims

1. An outdoor portable power supply (100), comprising:
a base assembly (110);
a guide rail component (120), said guide rail component (120) being arranged on said base assembly (110);
a telescopic component (130), said telescopic component (130) being arranged on said base assembly (110), and a part of said telescopic component being located inside said guide rail component (120);
a first battery (140), said first battery being arranged on said guide rail component (120), and sleeved on said telescopic component (130), **characterized in that** said first battery (140) has a first electrical connection part (141) at one end away from said guide rail component (120); and
said outdoor portable power supply (100) further comprises at least one second battery, one of said second batteries being sleeved on said telescopic component (130) and electrically connected to said first electrical connection part (141), the rest of said second batteries being successively sleeved on said telescopic component (130) along the axial direction of said telescopic component (130) and electrically connected in sequence, and the at least one second battery is configured to being sequentially removed from said telescopic component (130).

2. The outdoor portable power supply (100) according to claim 1, **characterized in that** said second battery has a second electrical connection part and a third electrical connection part, said second electrical connection part and said third electrical connection part being located at the two ends of said second battery, a second electrical connection part of one of said second batteries being electrically connected to said first electrical connection part (141), and a third electrical connection part of one of said second batteries being electrically connected to the second electrical connection part of an adjacent second battery.

3. The outdoor portable power supply (100) according to claim 1, **characterized in that** said outdoor portable power supply (100) further comprises a circuit board (150), said circuit board (150) being arranged within the casing of said first battery (140), and electrically connected to said first battery (140).

4. The outdoor portable power supply (100) according to claim 3, **characterized in that** said circuit board (150) is provided with a charging interface (151), and the casing of said first battery (140) has a first clearance hole (142) adapted to said charging interface (151).

5. The outdoor portable power supply (100) according to claim 3, **characterized in that** said circuit board (150) is provided with a power button (152), and the casing of said first battery (140) has a second clearance hole (143) adapted to said power button (152).

6. The outdoor portable power supply (100) according to claim 1, **characterized in that** said base assembly (110) comprises a base (111), a sliding component (112), a support framework (113), and a support element (114), said guide rail component (120) being arranged on said base (111), said sliding component (112) being slidably sleeved on said guide rail component (120), one end of said support framework (113) being hinged to said sliding component (112), said support element (114) being hinged to said support framework (113) and said base (111) respectively.

7. The outdoor portable power supply (100) according to claim 6, **characterized in that** said base assembly (110) further comprises a trigger device (115), said trigger device (115) being arranged within said sliding component (112), said trigger device (115) comprising a manual actuator (1151), a clamping component (1152), and an elastic element (1153), said sliding component (112) having a first through hole (1121) and a second through hole (1122), said manual actuator (1151) being movably inserted through said first through hole (1121) and connected to said clamping component (1152), one end of said clamping component being movably inserted through said second through hole (1122) and abutting against said guide rail component (120), said elastic element (1153) abutting against the end of said clamping component (1152) away from said second through hole (1122) and said sliding component (112).

8. An electronic component (1000), **characterized by** comprising an electronic device (200) and the outdoor portable power supply (100) according to any one of claims 1 to 7.

9. The electronic component (1000) according to claim 8, **characterized in that** one end of said electronic device (200) has a fourth electrical connection part (210) electrically connected to said first electrical connection part (141).

## Revendications

1. Alimentation électrique portable extérieure (100), comportant :
un ensemble de base (110) ;
un composant de rail de guidage (120), ledit composant de rail de guidage (120) étant agencé sur ledit ensemble de base (110) ;
un composant télescopique (130), ledit composant télescopique (130) étant agencé sur ledit ensemble de base (110), et une partie dudit composant télescopique étant située à l'intérieur dudit composant de rail de guidage (120) ;
une première batterie (140), ladite première batterie étant agencée sur ledit composant de rail de guidage (120), et emmanchée sur ledit composant télescopique (130), **caractérisée en ce que** ladite première batterie (140) présente une première partie de connexion électrique (141) à une extrémité éloignée dudit composant de rail de guidage (120) ; et
ladite alimentation électrique portable extérieure (100) comporte en outre au moins une deuxième batterie, l'une desdites deuxièmes batteries étant emmanchée sur ledit composant télescopique (130) et connectée électriquement à ladite première partie de connexion électrique (141), le reste desdites deuxièmes batteries étant successivement emmanché sur ledit composant télescopique (130) le long de la direction axiale dudit composant télescopique (130) et connectée électriquement en séquence, et l'au moins une deuxième batterie est configurée pour être retirée séquentiellement dudit composant télescopique (130).

2. Alimentation électrique portable extérieure (100) selon la revendication 1, **caractérisée en ce que** ladite deuxième batterie présente une deuxième partie de connexion électrique et une troisième partie de connexion électrique, ladite deuxième partie de connexion électrique et ladite troisième partie de connexion électrique étant situées aux deux extrémités de ladite deuxième batterie, une deuxième partie de connexion électrique de l'une desdites deuxièmes batteries étant connectée électriquement à ladite première partie de connexion électrique (141), et une troisième partie de connexion électrique de l'une desdites deuxièmes batteries étant connectée électriquement à la deuxième partie de connexion électrique d'une deuxième batterie adjacente.

3. Alimentation électrique portable extérieure (100) selon la revendication 1, **caractérisée en ce que** ladite alimentation électrique portable extérieure (100) comporte en outre une carte de circuit imprimé (150), ladite carte de circuit imprimé (150) étant agencée à l'intérieur du boîtier de ladite première batterie (140), et connectée électriquement à ladite première batterie (140).

4. Alimentation électrique portable extérieure (100) selon la revendication 3, **caractérisée en ce que** ladite carte de circuit imprimé (150) est pourvue d'une interface de charge (151), et le boîtier de ladite première batterie (140) présente un premier trou de dégagement (142) adapté à ladite interface de charge (151).

5. Alimentation électrique portable extérieure (100) selon la revendication 3, **caractérisée en ce que** ladite carte de circuit imprimé (150) est pourvue d'un bouton d'alimentation (152), et le boîtier de ladite première batterie (140) présente un deuxième trou de dégagement (143) adapté audit bouton d'alimentation (152).

6. Alimentation électrique portable extérieure (100) selon la revendication 1, **caractérisée en ce que** ledit ensemble de base (110) comporte une base (111), un composant coulissant (112), un cadre de support (113), et un élément de support (114), ledit composant de rail de guidage (120) étant agencé sur ladite base (111), ledit composant coulissant (112) étant emmanché de manière coulissante sur ledit composant de rail de guidage (120), une extrémité dudit cadre de support (113) étant articulée sur ledit composant coulissant (112), ledit élément de support (114) étant articulé sur ledit cadre de support (113) et ladite base (111) respectivement.

7. Alimentation électrique portable extérieure (100) selon la revendication 6, **caractérisée en ce que** ledit ensemble de base (110) comporte en outre un dispositif de déclenchement (115), ledit dispositif de déclenchement (115) étant agencé à l'intérieur dudit composant coulissant (112), ledit dispositif de déclenchement (115) comportant un actionneur manuel (1151), un composant de serrage (1152), et un élément élastique (1153), ledit composant coulissant (112) présentant un premier trou traversant (1121) et un deuxième trou traversant (1122), ledit actionneur manuel (1151) étant inséré de manière mobile à travers ledit premier trou traversant (1121) et connecté audit composant de serrage (1152), une extrémité dudit composant de serrage étant insérée de manière mobile à travers ledit deuxième trou traversant (1122) et en butée contre ledit composant de rail de guidage (120), ledit élément élastique (1153) étant en butée contre l'extrémité dudit composant de serrage (1152) à l'écart dudit deuxième trou traversant (1122) et dudit composant coulissant (112).

8. Composant électronique (1000), **caractérisé en ce qu'**il comporte un dispositif électronique (200) et l'alimentation électrique portable extérieure (100) selon l'une quelconque des revendications 1 à 7.

9. Composant électronique (1000) selon la revendication 8, **caractérisé en ce qu'**une extrémité dudit dispositif électronique (200) présente une quatrième partie de connexion électrique (210) connectée électriquement à ladite première partie de connexion électrique (141).

## Patentansprüche

1. Tragbare Outdoor-Stromversorgung (100), umfassend:
eine Basisbaugruppe (110);
eine Führungsschienenkomponente (120), wobei die Führungsschienenkomponente (120) auf der Basisbaugruppe (110) angeordnet ist;
eine Teleskopkomponente (130), wobei die Teleskopkomponente (130) auf der Basisbaugruppe (110) angeordnet ist und ein Teil der Teleskopkomponente sich innerhalb der Führungsschienenkomponente (120) befindet;
eine erste Batterie (140), wobei die erste Batterie auf der Führungsschienenkomponente (120) angeordnet und auf der Teleskopkomponente (130) ummantelt ist, **dadurch gekennzeichnet, dass** die erste Batterie (140) ein erstes elektrisches Verbindungsteil (141) an einem Ende entfernt von der Führungsschienenkomponente (120) aufweist; und
die Outdoor-Stromversorgung (100) weiter zumindest eine zweite Batterie umfasst, wobei eine von den zweiten Batterien an der Teleskopkomponente (130) ummantelt und mit dem ersten elektrischen Verbindungsteil (141) elektrisch verbunden ist, wobei der Rest der zweiten Batterien auf der Teleskopkomponente (130) nacheinander entlang der Axialrichtung der Teleskopkomponente (130) ummantelt und in Folge elektrisch verbunden ist, und die zumindest eine zweite Batterie dazu konfiguriert ist, nacheinander aus der Teleskopkomponente (130) entfernt zu werden.

2. Outdoor-Stromversorgung (100) nach Anspruch 1, **dadurch gekennzeichnet, dass** die zweite Batterie ein zweites elektrisches Verbindungsteil und ein drittes elektrisches Verbindungsteil aufweist, wobei sich das zweite elektrische Verbindungsteil und das dritte elektrische Verbindungsteil an den zwei Enden der zweiten Batterie befinden, wobei ein zweites elektrisches Verbindungsteil einer der zweiten Batterien mit dem ersten elektrischen Verbindungsteil (141) elektrisch verbunden ist, und ein dritter elektrischer Verbindungsteil einer der zweiten Batterien mit dem zweiten elektrischen Verbindungsteil einer benachbarten zweiten Batterie elektrisch verbunden ist.

3. Outdoor-Stromversorgung (100) nach Anspruch 1, **dadurch gekennzeichnet, dass** die tragbare Outdoor-Stromversorgung (100) weiter eine Leiterplatte (150) umfasst, wobei die Leiterplatte (150) innerhalb des Gehäuses der ersten Batterie (140) angeordnet und mit der ersten Batterie (140) elektrisch verbunden ist.

4. Tragbare Outdoor-Stromversorgung (100) nach Anspruch 3, **dadurch gekennzeichnet, dass** die Leiterplatte (150) mit einer Ladeschnittstelle (151) versehen ist, und das Gehäuse der ersten Batterie (140) ein erstes, an die Ladeschnittstelle (151) angepasstes Durchgangsloch (142) aufweist.

5. Tragbare Outdoor-Stromversorgung (100) nach Anspruch 3, **dadurch gekennzeichnet, dass** die Leiterplatte (150) mit einem Netzschalter (152) versehen ist und das Gehäuse der ersten Batterie (140) ein zweites, an den Netzschalter (152) angepasstes Durchgangsloch (143) aufweist.

6. Tragbare Outdoor-Stromversorgung (100) nach Anspruch 1, **dadurch gekennzeichnet, dass** die Basisbaugruppe (110) eine Basis (111), eine Gleitkomponente (112), einen Stützrahmen (113) und ein Stützelement (114) umfasst, wobei das Führungsschienenelement (120) auf der Basis (111) angeordnet ist, wobei die Gleitkomponente (112) auf dem Führungsschienenelement (120) verschiebbar ummantelt ist, wobei ein Ende des Stützrahmens (113) an der Gleitkomponente (112) angelenkt ist, das Stützelement (114) an dem Stützrahmen (113) bzw. der Basis (111) angelenkt ist.

7. Tragbare Outdoor-Stromversorgung (100) nach Anspruch 6, **dadurch gekennzeichnet, dass** die Basisbaugruppe (110) weiter eine Auslösevorrichtung (115) umfasst, wobei die Auslösevorrichtung (115) innerhalb der Gleitkomponente (112) angeordnet ist, wobei die Auslösevorrichtung (115) einen manuellen Aktuator (1151), eine Klemmkomponente (1152) und ein elastisches Element (1153) umfasst, wobei die Gleitkomponente (112) ein erstes Durchgangsloch (1121) und ein zweites Durchgangsloch (1122) aufweist, wobei der manuelle Aktuator (1151) beweglich durch das erste Durchgangsloch (1121) eingeführt und mit der Klemmkomponente (1152) verbunden ist, wobei ein Ende der Klemmkomponente beweglich durch das zweite Durchgangsloch (1122) eingeführt wird und gegen das Führungsschienenelement (120) anstößt, wobei das elastische Element (1153) gegen das Ende der Klemmkomponente (1152) abseits des zweiten Durchgangslochs (1122) und des Gleitelements (112) anstößt.

8. Elektronische Komponente (1000), **dadurch gekennzeichnet, dass** sie eine elektronische Vorrichtung (200) und die tragbare Outdoor-Stromversorgung (100) nach einem der Ansprüche 1 bis 7 umfasst.

9. Elektronische Komponente (1000) nach Anspruch 8, **dadurch gekennzeichnet, dass** ein Ende der elektronischen Vorrichtung (200) ein viertes elektrisches Verbindungsteil (210) aufweist, welches elektrisch mit dem ersten elektrischen Verbindungsteil (141) verbunden ist.
